# EUROPEAN PATENT SPECIFICATION

(11) **EP 4 267 901 B1**
(45) Date of publication and mention of the grant of the patent: **27.08.2025**
(21) Application number: 21840484.6
(22) Date of filing: 15.12.2021
(51) Int. Cl.: F28B 1/00, F28B 9/00, F28C 1/14, F28C 3/08, F28D 1/02, F28D 1/047, F28D 5/00, F28D 7/04, F28D 9/04, F28F 25/02, F28F 25/06, F28F 25/00

(54) **EVAPORATIVE WET SURFACE AIR COOLER**
LUFTKÜHLER MIT VERDAMPFENDER NASSER OBERFLÄCHE
REFROIDISSEUR D'AIR DE SURFACE PAR ÉVAPORATION

(30) Priority: 23.12.2020 US 202017133143; 23.02.2021 EP 21158627
(43) Date of publication of application: 01.11.2023
(73) Proprietor: Alfa Laval Corporate AB, 221 00 Lund (SE)
(72) Inventor: SHAHRPASS, Kevin, New York 14131 (US); PAWLAK, Christian, LANCASTER, NY 14086 (US); ANDERSSON, Christian, 254 50 HELSINGBORG (SE)
(74) Representative: Alfa Laval Attorneys
(86) International application number: PCT/EP2021/085953
(87) International publication number: WO 2022/136061

(56) References cited:
- IT-A1- VR20 090 159
- US-A- 2 142 747
- US-A- 5 724 828
- US-A1- 2005 039 892
- US-A1- 2006 179 866
- US-B2- 10 260 816

## Description

### FIELD OF INVENTION

The present invention is directed to a wet surface air cooler (WSAC) having reduced cost, reduced footprint and improved thermal performance.

### DESCRIPTION OF THE BACKGROUND ART

Existing evaporative cooling technologies, such as existing wet surface air coolers for industrial applications, have a large footprint and high operating cost.

A traditional wet surface air cooler (WSAC) (e.g., evaporative cooler) is comprised of a tube bundle for facilitating process fluid flow, a spray system that distributes water over a top of the tube bundle, and a fan or a set of fans that pulls air through the tube bundle. The air/spray water mixture on the outside surfaces of the tubes provides an evaporative cooling effect that removes heat from the process fluid and then rejects the heat out of both the fan stack and back into a spray water collection basin.

For instance, US Patent No.: 6,598,862 (herein "862 patent"), discloses an evaporative cooler including a direct heat transfer section 324 separated from an indirect cooling section or indirect heat transfer section 330 by a wall 369, the wall 369 extending to a liquid collector 338 (e.g., a basin), and the liquid collector 338 collecting water ejected from nozzles 344 of the direct heat transfer section 324 and water ejected from nozzles 382 of the indirect cooling section 330. Pumps 362 and 376 are provided for recirculating water from the liquid collector 338 to respective nozzles 382, 344 (862 Patent FIG. 7 and column 13, lines 31-39). Further, the 862 Patent discloses that the direct heat transfer section 324 includes a wet deck fill 326, a drift eliminator 352 and "the air flows in through air inlets 348 and up through the fill 326 to pass through the drift eliminator 352 and past the air moving device 328 to exit through the opening 350" (862 Patent FIG. 7, column 12, lines 59-62 and column 14, lines 1-6). The 862 Patent discloses that it is desired to have the coil 332 outside of the air flow, which is achieved by the wall 369, such that "the heat transfer coil 332 is positioned substantially outside of the flow of air through the housing" to reduce the need for additional flow requirements and reduce the need for "extra air moving horsepower" (862 Patent column 2, lines 29-32 and column 14, lines 1-3).

US 10 260 816 B2 discloses a heat exchange system comprising a vertical centermost plenum surrounded by a heat exchange coil of tubes and housed in a plurality of side panels and a base. The plurality of side panels have air intakes that communicate outside air into the cabinet above the heat exchange coil and sprayers. A stream of spray water and air is drawn downwardly over a heat exchange coil. A portion of the spray water is separated from the air by drawing the air inward to the plenum. The air is then drawn upwardly within the plenum to an exhaust external to the enclosure by a fan.

### SUMMARY OF THE INVENTION

The present invention is directed to utilizing a spiral plate type heat exchanger for a wet surface air cooler, in combination with evaporative cooling technology, to provide a more efficient and compact solution to industrial cooling applications.

The present invention enhances the evaporative cooling process of the WSAC by utilizing an evaporative spiral (i.e., spiral shaped) plate heat exchanger in place of a tube bundle, where the evaporative spiral plate type heat exchanger is exposed to evaporative cooling. A spiral plate heat exchanger may be referred to as a spiral heat exchanger. A cooling medium, such as water, is sprayed on the outside heat transfer surfaces of the evaporative spiral plate heat exchanger and air is either pushed or pulled, via a fan, through open passageways in the evaporative spiral plate heat exchanger to produce an evaporative cooling effect.

The present invention is operable in both co-current and counter-current arrangements with respect to the direction of air flow through the evaporative spiral plate heat exchanger and the direction of the sprayed cooling medium, depending on how the fan is positioned. The present invention may further comprise a direct heat exchange section comprised of cooling tower fill to cool the spray water down and provide further increase to the heat transfer efficiency.

A wet surface air cooler (WSAC) includes an evaporative spiral plate heat exchanger including a first channel configured to receive a process medium, a spray system configured to spray a cooling medium onto the spiral plate heat exchanger, and a fan configured to force air to flow through the evaporative spiral plate heat exchanger, wherein the combination of the sprayed cooling medium onto the evaporative spiral plate heat exchanger and the air flowing through the evaporative spiral plate heat exchanger causes the cooling medium to at least partially evaporate to cause a temperature of the process medium to decrease.

The first channel of the evaporative spiral plate heat exchanger may have a spiral shape and include a plurality of winds for flowing the process medium, the evaporative spiral plate heat exchanger may further include a set of second channels extending axially through the evaporative spiral plate heat exchanger for receiving air and cooling medium, and each second channel may be provided between winds of the first channel.

The first channel may be a closed path extending between an inlet and an outlet and is closed at top and bottom surfaces of the evaporative spiral plate heat exchanger, and the second channels may be open at the top and bottom surfaces of the evaporative spiral plate heat exchanger.

The inlet may be provided at a radial center of the evaporative spiral plate heat exchanger and the outlet may be provided at an outermost radial surface of the evaporative spiral plate heat exchanger, or the inlet may be provided at the outermost radial surface of the evaporative spiral plate heat exchanger and the outlet may be provided at the radial center of the evaporative spiral plate heat exchanger.

The evaporative spiral plate heat exchanger may have a cross-flow arrangement in which a direction of air and/or the cooling medium flowing through the second channels is perpendicular to a direction of the process medium flowing through the first channel.

The WSAC may further comprise a lower housing including a plurality of airflow passages and a basin, the basin may be configured to receive the cooling medium sprayed by the spray system.

The airflow passages of the lower housing may be configured to allow air to flow from inside of the WSAC to outside of the WSAC or from outside of the WSAC to inside of the WSAC. The fan may be provided above the evaporative spiral plate heat exchanger, and the evaporative spiral plate heat exchanger may be provided on the lower housing.

The lower housing may be a lower module, and the fan and the spray system may be part of an upper module, and the upper module may be configured to be removably fastened to an upper surface of the evaporative spiral plate heat exchanger and the lower module may be configured to be removably fastened to a lower surface of the evaporative spiral plate heat exchanger.

The fan, the spray system and the evaporative spiral plate heat exchanger may be stacked in a vertical direction.

The spray system may be a concentric spray system including a plurality of distribution channels that are spaced from one another to distribute the cooling medium over the evaporative spiral plate heat exchanger.

**The** fan may be horizontally spaced from the evaporative spiral plate heat exchanger.

The WSAC may further comprise a lower housing including a basin, the basin may be configured to receive the cooling medium sprayed by the spray system, the fan and the evaporative spiral plate heat exchanger may be provided on a top surface of the lower housing, and the spray system may be provided above the evaporative spiral plate heat exchanger.

The fan may be configured to force air across the basin and through the evaporative spiral plate heat exchanger or through the evaporative spiral plate heat exchanger and across the basin.

The spiral plate heat exchanger may include at least one spiral sheet wound to form the first channel. The wound at least one spiral sheet may also form the second channel. Thus, the spiral plate heat exchanger may include at least one spiral sheet wound to form the first channel and the second channel. The at least one spiral sheet may separate the first channel and the second channel.

The spiral plate heat exchanger may include a spiral body formed by the wound at least one spiral sheet. Distance members may be attached to said at least one spiral sheet to separate the windings of said at least one spiral sheet. The spiral body may be enclosed by a substantially cylindrical shell.

A method of cooling with a wet surface air cooler (WSAC), the WSAC may comprise an evaporative spiral plate heat exchanger including a first channel configured to receive a process medium, a spray system configured to spray a cooling medium onto the spiral plate heat exchanger, and a fan configured to force air to flow through the evaporative spiral plate heat exchanger, the method may comprise flowing the process medium through the first channel, and simultaneously spraying, by the spray system, the cooling medium and operating the fan to flow air through the evaporative heat exchanger and cause the cooling medium to at least partially evaporate and cause a temperature of the process medium to decrease.

The first channel of the evaporative spiral plate heat exchanger may have a spiral shape and includes a plurality of winds for flowing the process medium, and the evaporative spiral plate heat exchanger may further include a set of second channels extending axially through the evaporative spiral plate heat exchanger, each second channel is provided between winds of the first channel, the method further comprising, during the simultaneously spraying the cooling medium and operating the fan, flowing the cooling medium and air through the second channels in a same direction or in opposite directions. The first channel may be a closed path extending between an inlet and an outlet and is closed at top and bottom surfaces of the evaporative spiral plate heat exchanger, and the second channels may be open at the top and bottom surfaces of the evaporative spiral plate heat exchanger, said method may further comprise flowing the process medium from a center of the evaporative spiral plate heat exchanger, radially outwardly through the first channel to an outer surface of the evaporative spiral plate heat exchanger, allowing the cooling medium to flow downwardly through gravity, and forcing the air upwardly, opposite to the direction of the cooling medium.

The first channel may be a closed path extending between an inlet and an outlet and may be closed at top and bottom surfaces of the evaporative spiral plate heat exchanger, and the second channels may be open at the top and bottom surfaces of the evaporative spiral plate heat exchanger, the method may further comprise flowing the process medium from an outer surface of the evaporative spiral plate heat exchanger, radially inwardly through the first channel to a center of the evaporative spiral plate heat exchanger, allowing the cooling medium to flow downwardly through gravity, and forcing the air upwardly, opposite to the direction of the cooling medium.

The fan and the spray system may be part of an upper module, and the WSAC may further comprise a lower module including a plurality of airflow passages and a basin, the method may further comprise removably fastening the upper module to an upper surface of the evaporative spiral plate heat exchanger and removably fastening the lower module to a lower surface of the evaporative spiral plate heat exchanger.

The spiral plate heat exchanger of the present invention provides more efficient heat transfer and thus require less surface area, resulting in a more compact WSAC with a drastically reduced footprint over a traditional WSAC.

Further scope of applicability of the invention will become apparent from the detailed description given hereinafter. However, it should be understood that the detailed description and specific examples, while indicating embodiments of the invention, are given by way of illustration only, since various changes and modifications within the scope of the invention as defined in the appended claims will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG.1 is a cross-sectional view of the WSAC according to an embodiment of the present invention.
FIG. 2 is a cross-sectional perspective view of the WSAC according to an embodiment of the present invention.
FIG. 3 is a perspective cross-sectional view illustrating the evaporative spiral plate heat exchanger according to an embodiment the present invention.
FIG. 4 is a cross-sectional view of the WSAC according to an embodiment of the present invention.
FIG. 5 is a perspective view of the WSAC according to an embodiment of the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

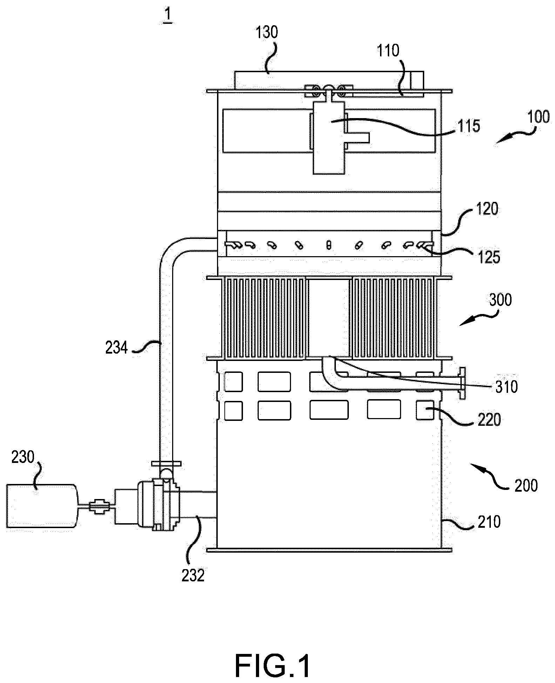

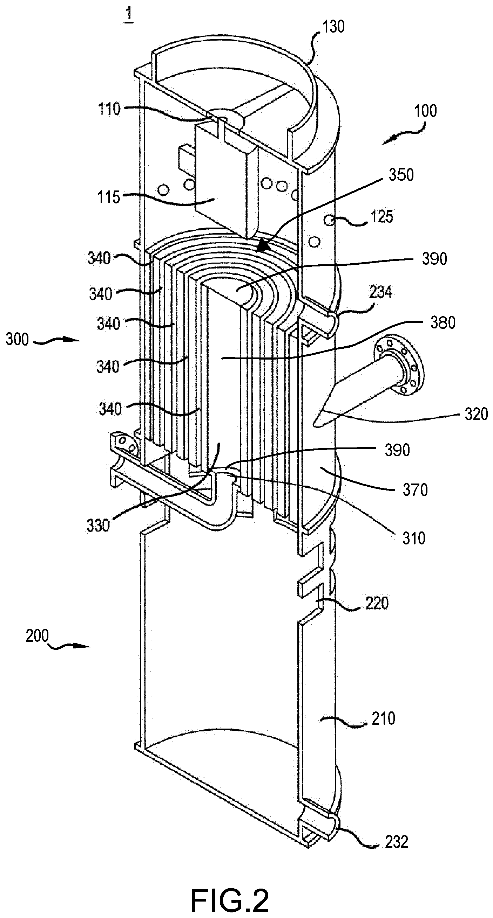

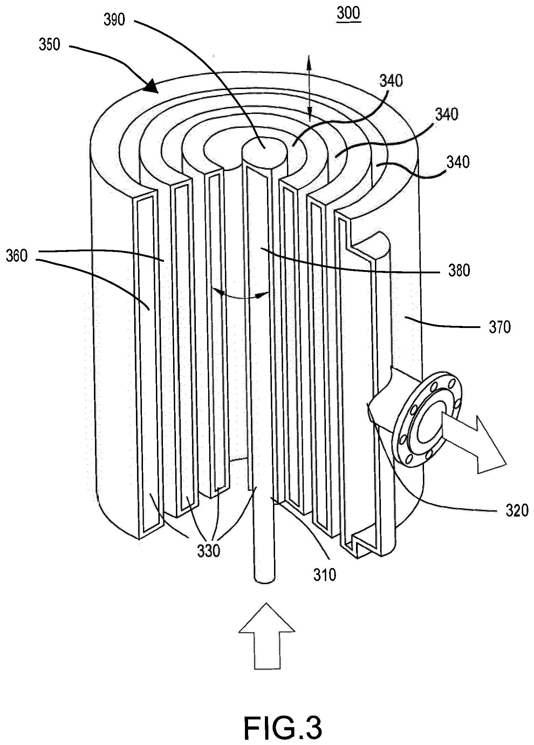

FIG. 1 is a cross-sectional view of the WSAC according to an embodiment of the present invention. FIG. 2 is a cross-sectional perspective view of the WSAC according to an embodiment of the present invention. FIG. 3 is a perspective cross-sectional view illustrating the evaporative spiral plate heat exchanger according to an embodiment of the present invention.

The WSAC 1 according to a first embodiment of the present invention includes an upper module 100, a lower module 200, and an evaporative spiral plate heat exchanger 300.

The upper module 100 includes a fan 110 (e.g., exhaust fan) having a fan motor 115, a spray system 120 having a plurality of distribution channels 125 and a first passage 130. The fan 110 and fan motor 115 may be provided within a housing of the upper module 100. Further, the center of the fan 110 may be centrally located within the upper housing. The distribution channels 125 may be in the form of nozzles, holes in a slotted pipe, or the like. The spray system 120 may be a concentric spray system 120 and the plurality of distribution channels 125 may be equally spaced from one another along a circumference of the upper module 100 to distribute the cooling medium over (i.e., over the top of) the evaporative spiral plate heat exchanger 300. Alternatively, the plurality of distribution channels 125 may have any spacing from one another and may be provided on any surface of the upper module 100, so as to distribute the cooling medium over (i.e., over the top of) the evaporative spiral plate heat exchanger 300.

Each of the upper module 100, the lower module 200 and the evaporative spiral plate heat exchanger 300 may be provided with flanges to allow for connection between the upper module 100, the lower module 200 and the evaporative spiral plate heat exchanger 300. The lower module 200 may be a lower housing 200.

The upper module 100 may be removably coupled to a top surface (e.g., a top flange) of the evaporative spiral plate heat exchanger 300, via fasteners (i.e., bolts, screws, rivets, etc.), and the lower module 200 may be removably coupled to a bottom surface (e.g., a bottom flange) of the evaporative spiral plate heat exchanger 300, via fasteners (i.e., bolts, screws, rivets, etc.). In case the spiral plate heat exchanger comprises a shell 370, the shell 370 may be provided with the flanges, such as the top flange and the bottom flange. Further, the evaporative spiral plate heat exchanger 300 may be vertically stacked onto the lower module 200, and the upper module 110 may be vertically stacked onto the evaporative spiral plate heat exchanger 300, such that the upper module 100, the lower module 200 and the evaporative spiral plate heat exchanger 300 are in a vertically stacked configuration, as shown in FIGs. 1 and 2.

The upper module 100 may be removably coupled to the top surface of the evaporative spiral plate heat exchanger 300 in order to permit easy replacement with another upper module 100 having a different configuration, such as a different height, a different fan size, and/or a different shape. Similarly, the lower module 200 may be removably coupled to the bottom surface of the evaporative spiral plate heat exchanger 300 in order to permit easy replacement with another lower module 200 having a different number or size of the airflow passages 220, a differently sized basin and/or a different shape.

The WSAC 1, including the upper module 100, the lower module 200 and the evaporative spiral plate heat exchanger 300, may have a circular cross-sectional shape. The plurality of distribution channels 125 of the spray system 120 may be located around a circumference of the spray system 120 to form a concentric spray pattern, which causes an even distribution of cooling medium onto the evaporative spiral plate heat exchanger 300. Further, the plurality of distribution channels 125 may be evenly spaced or randomly spaced around the circumference of the spray system 120. The spray system 120 may spray water or any other known cooling medium onto the evaporative spiral plate heat exchanger 300, to be collected in the basin 210.

Alternatively, the upper module 100, the lower module 200 and the evaporative spiral plate heat exchanger 300 may have any cross-sectional shape, including any polygonal shape (i.e., rectangular, pentagonal, hexagonal), an elliptical shape, etc.

The lower module 200 includes a basin 210 that collects water sprayed from the spray system 120, one or more airflow passages 220, a pump 230, a first fluid line 232 and a second fluid line 234. The one or more airflow passages 220 may be evenly spaced around a circumference of the lower module 200, and the number of airflow passages 220 and the size of each airflow passage 220 may be modified to optimize air flow through the WSAC 1. Further, FIG. 1 shows the one or more airflow passages 220 positioned at a top portion of the lower module 200, however, the one or more airflow passages 220 may be positioned at any height along the lower module 200.

In a counter-current arrangement of the WSAC 1, the fan 110 draws in air through the one or more airflow passages 220, upwards through the evaporative spiral plate heat exchanger 300, and out through the first passage 130. That is, the upward direction of airflow through the WSAC 1 is counter to the downward direction of cooling medium sprayed by the distribution channels 125 (i.e., due to the gravity force).

Alternatively, in a co-current arrangement of the WSAC 1, the fan 110 pushes air down from the first passage and down through the evaporative spiral plate heat exchanger 300, and finally out through the one or more airflow passages 220. That is, the downward direction of airflow through the WSAC 1 is co-current to the downward direction of cooling medium sprayed by the distribution channels 125.

The cooling medium that is collected in the basin 210 is recycled by the pump 230, the first fluid line 232 and the second fluid line 234. Specifically, the collected cooling medium is pumped, by the pump 230, through the first fluid line 232, then through the second fluid line 234 to the spray system 120. The spray system 120, via the distribution channels 125, sprayed the cooling medium onto the evaporative spiral plate heat exchanger 300 in a continuous manner. That is, the pumped 230 may provide a continuous flow of cooling medium to the spray system 120, and the spray system 120 may continuously spray the cooling medium onto the evaporative spiral plate heat exchanger 300.

As illustrated in FIGs. 2 and 3, the evaporative spiral plate heat exchanger 300 includes an inlet 310, and outlet 320, a first channel 330 (i.e., first fluid channel) and second channels 340. The first channel 330 is connected to the inlet 310 and to the outlet 320 and has a spiral configuration (i.e., spiral shaped cross-sectional profile). That is, the first channel 330 begins at a cross-sectional center of the evaporative spiral plate heat exchanger 300 and spirals radially outward to the outlet 320 of the evaporative spiral plate heat exchanger 300. The first channel 330 and the second channel 340 extend substantially in parallel to each other.

Further, the evaporative spiral plate heat exchanger 300 may be oriented such that a center axis of the evaporative spiral plate heat exchanger 300 is along a vertical axis of the WSAC 1, and a radial axis of the evaporative spiral plate heat exchanger 300 is along a horizontal axis of the WSAC 1.

A spiral plate heat exchanger normally includes two spiral sheets extending along a respective spiral-shaped path around the center axis and forming the first channel and the second channel, which are substantially parallel to each other. Distance members, having a height corresponding to the width of the flow channels, may be attached to at least one of the sheets, typically welded to at least one of the sheets, to separate the sheets, obtain a desired distance between the sheets and give rigidity to the spiral plate heat exchanger, in particular to a spiral body of the spiral plate heat exchanger.

The spiral plate heat exchanger 300 includes at least one spiral sheet 360 wound to form the first channel 330. The wound at least one spiral sheet 360 also forms the second channel 340.

The wound at least one spiral sheet 360 separates the first channel 330 and the second channel 340.

The spiral plate heat exchanger 300 includes a spiral body 350 formed by the wound at least one spiral sheet 360. Distance members (not shown), e.g. studs, typically cylindrical studs, may be attached to said at least one sheet 360 to separate the windings of said at least one sheet 360.

The spiral plate heat exchanger 300 includes a spiral body 350. The spiral body 350 is formed by at least one spiral sheet 360 wound to form the spiral body 350. The spiral body 350 forms a spiral-shaped first channel 330 and a spiral-shaped second channel 340.

The spiral body 350 is typically formed by two spiral sheets 360 of metal wound to form the spiral-shaped first channel 330 and the spiral-shaped second channel 340. Alternatively, the spiral body 350 may be formed from a single sheet 360 of metal providing two sheet portions extending from the center of the spiral body 350 and wound to form the spiral body 350. The spiral body 350 may be formed in a conventional way by winding two sheets 360 of metal around a retractable mandrel, but it can also be formed in other ways. In the figures, the spiral body 350 only has been schematically shown with a number of windings, but it is obvious that it may include further windings and that the windings are formed from the center of the spiral body 350 all the way out to the periphery of the spiral body 350. When the at least one spiral sheet 360 is wound windings are formed, more precisely, a plurality of windings are formed.

The spiral body 350 is enclosed by a substantially cylindrical shell 370. The spiral body 350 may be enclosed by a separate shell 370 (as shown in FIG. 2), or alternatively the sheets 360 forming the spiral body may also constitute the shell 370 by the outer winding of the sheet 360 (as shown in FIG. 3). The spiral body 350 comprises a center body 380, which typically is cylindrical. The center body 380 may be formed by a center portion of the sheet(s), or by a cylindrical center piece. The center body 380 of the spiral plate heat exchanger is covered by center covers 390, which is welded onto the spiral body 350, more precisely at each end, i.e. the top and bottom ends, of the center body 380.

The center body 380 of the spiral body 350 may be formed by a cylindrical piece on which an end of each spiral sheet 360 is welded. Alternatively, the center body 380 of the spiral body 350 may be formed by inserting an end of each of the two sheets 360 of metal into opposite slits of the retractable mandrel as described in WO2010/130580A1, which is incorporated herein by reference. As a further alternative, the starting material for the spiral body 350 may be a single sheet 360, where a central portion of the single sheet 360 is inserted in a mandrel and two sheet portions extending from the central portion are wound to form the spiral body 350 as well as the center body 380. The winding machine winds the sheets 360 to form the spiral body 350. After the winding machine has completed the winding of the sheets 360 of metal, the spiral body 350 is removed from the winding machine and the retractable mandrel is removed. The spiral body 350 is then moved to a welding station for manually or by a welding machine seal or close up the first channel 330 and the second channel 340 from each other by welding together the edges, i.e. the top and bottom edges, of the windings of the sheets 360 to each other such that the first channel 330 is closed and the second channel 340 is open at the top and bottom. This is done by closing every second winding opening by welding. The center covers 390 are welded onto each end opening of the center body 380 to achieve a resistant and sealed center body 380.

The sheet 360 is a plate that is sufficiently flexible to enable winding of the plate into a spiral shape. However, a winding machine may be needed to achieve the winding of the sheet/plate into a spiral shape.

As illustrated in FIG. 3, shown by the arrows, the evaporative spiral plate heat exchanger 300 has a cross-flow arrangement in which the direction of air and/or cooling medium flowing through the second channels 340 is cross or perpendicular to the direction of the process medium flowing through the first channel 330.

The evaporative spiral plate heat exchanger 300 may include a header connected to the outlet 320, as shown in FIG. 3, or may be provided without a header, as shown in FIGs. 1, 2, 4 and 5.

The evaporative spiral plate heat exchanger 300, including the first channel 330 or more precisely the at least one sheet 360 forming the first channel 330, may be comprised of a metal material, with good thermal conductivity, such as stainless steel, copper, galvanized steel, any other known material. Further, the first channel 330 may radiate heat (i.e., conduct heat) away from the process medium toward the second channels 340. Further, the cooling medium sprayed onto the evaporative spiral plate heat exchanger 300 is coated along an entire length (i.e., axial length) of the second channels 340 to further conduct heat away from the process medium. Due to the construction of the evaporative spiral plate heat exchanger 300 with a vertical channel (second channels 340), it allows for a heat exchanger design making optimal use of the available pressure drop while allowing maximum exposure of the airflow and cooling medium to the heat transfer surface, thus improving the thermal dissipation effect of the evaporative spiral plate heat exchanger 300.

A process medium (e.g., hot process medium) flows through the evaporative spiral plate heat exchanger 300 by a means known in the art. In the present invention, the process medium flow through the inlet 310, through the first channel 330, and out of the outlet 320. The process medium may be any type of hot process medium as known in the art, such as water, glycol, oil, fuel, gasses or the like, or for condensing steam, ammonia, propylene, butane, or the like.

Further, as shown in FIG. 2, an inlet connection may extend from outside of the WSAC 1, to the cross-sectional center of the evaporative spiral plate heat exchanger 300 and an outlet connection may extend from an outer extent (i.e., outermost radial extent) of the WSAC 1.

FIG. 3 illustrates the evaporative spiral plate heat exchanger 300 oriented vertically (i.e., in a height direction), in the same manner as shown in FIGs. 1 and 2, such that air flows axially through the evaporative spiral plate heat exchanger 300, which is caused by the fan 110.

That is, the process medium flows from the inlet 310 located at a cross-sectional center of the evaporative spiral plate heat exchanger 300 radially outwardly in a spiral manner to the outlet 320, which may be provided at a circumference or outermost radial surface of the evaporative spiral plate heat exchanger 300. The second channels 340 are located between each wind (e.g., turn) of the first channel 330, to permit airflow around each wind of the first channel 330. That is, the second channels 340 are axial channels that extend in an axial direction (i.e., vertical direction) of the WSAC 1 (and likewise an axial/vertical direction of the evaporative spiral plate heat exchanger 300). The second channels 340 (or set of second channels 340) may be formed by a single continuous spiral channel 340 extending axially through the evaporative spiral plate heat exchanger 300, in which each of the second channels 340 may be connected to one another. That is, each portion of the second channel within a respective wind of the first channel may be construed as one of the plurality of second channels.

Alternatively, an outlet connection may extend from outside of the WSAC 1, to the cross-sectional center of the evaporative spiral plate heat exchanger 300, and an inlet connection may extend from an outer extent of the WSAC 1. That is, process medium may flow from the inlet 320 located at an outermost radial extent of the evaporative spiral plate heat exchanger 300 radially inwardly in a spiral manner to the outlet 310, the outlet 310 being positioned at a radial center of the evaporative spiral plate heat exchanger 300. The second channels 340 are located between each wind (e.g., turn) of the first channel 330, to permit airflow around each wind of the first channel 330.

Airflow generated by the fan may flow from outside of the WSAC 1 through the one or more airflow passages 220, through the second channels 340, and out through the first passage 130. That is, the fan 110 may pull air through the WSAC 1. Alternatively, the fan 110 may push air through the WSAC 1 by pushing air in from the first passage 130, through the evaporative spiral plate heat exchanger 300, and out through the one or more airflow passages 220 of the lower module.

The combination of the sprayed cooling medium onto the evaporative spiral plate heat exchanger 300 (i.e., the second channels 340), and the airflow through the second channels 340 of the evaporative spiral plate heat exchanger 300 causes the cooling medium on the second channels 340 evaporate, which further increases the thermal conductivity of the evaporative spiral plate heat exchanger 300. That is, the evaporative spiral plate heat exchanger 300 is exposed to cooling medium sprayed thereon by the spray system 120, vapor in the form of evaporated cooling medium, and airflow via the fan 110 through the airflow passages 220.

The spray system 120 of the present invention keeps a surface (i.e., vertical surface) of the second channels 340 coated with the cooling medium (i.e., wet) to improve the wetting of the evaporative spiral plate heat exchanger 300 and thus the cooling effect from the spray system 120.

This evaporative effect of the present invention improves the dissipation of heat from the process medium, thereby improving the efficiency of the WSAC 1. Due to the improved thermal efficiency, the WSAC 1 according to the present invention can have a reduced footprint (i.e., a reduced diameter). Further, the vertically stacked configuration of the WSAC 1, including the circular cross section for the upper module 100, the lower module 200 and the evaporative spiral plate heat exchanger 300 according to the present invention, results in a reduced pressure loss on the fan side of the WSAC 1 (i.e., at the first passage 130, to enhance the efficiency of the WSAC 1).

That is, the spiral shape of the evaporative spiral plate heat exchanger 300 allows airflow axially therethrough (i.e., through the second channels 340) and cooling medium to be sprayed thereon to contacts an entire axial length of each second channel 340. The contact of water with the entire axial length of the second channel 340 improves the cooling effect of the process medium.

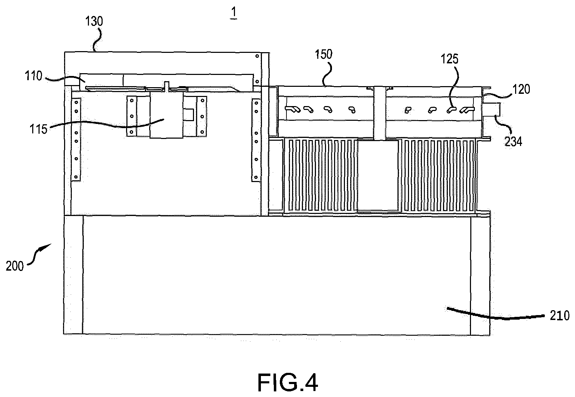

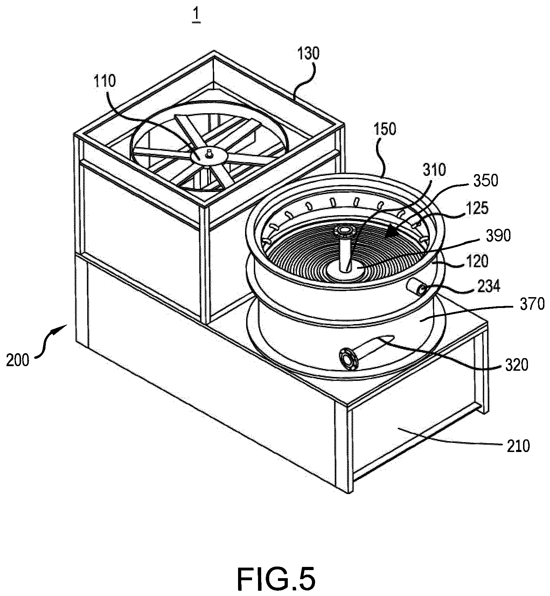

FIGs. 4 and 5 are directed to an alternate embodiment of the present invention in which the fan 110 is spaced apart in a horizontal direction from the spray system 120, and each of the fan 110 and the spray system 120 are mounted onto the lower housing 200 comprising the basin 210.

The embodiment of FIGs. 4 and 5 also includes the evaporative spiral plate heat exchanger 300 with the same structure and orientation as shown in FIGs. 1-3. Further, the embodiment of FIGs. 4 and 5 operates in a similar manner to the embodiment of FIGs. 1-3, with the difference mainly being the location of the fan 110 relative to the evaporative spiral plate heat exchanger 300.

Further, instead of having air passages, the embodiment of FIGs. 4 and 5 includes a second passage 150 positioned at a top surface of the spray system 120, in order to introduce air into the WSAC 1 or to expel air out of the WSAC 1.

As in the embodiment of FIGs. 1 and 2, cooling medium collected in the basin 210 of the lower module 200 is pumped, by the pump 230, back to the spray system 120 via the first and second fluid lines 232, 234.

The WSAC 1 of FIGs. 4 and 5 can operate in a counter-current arrangement, in which the fan 110 draws in air through the first passage 130, down and across the basin 210, upwards through the evaporative spiral plate heat exchanger 300, and out through the second passage 150. That is, the upward direction of airflow through the evaporative spiral plate heat exchanger 300 is counter to the downward direction of cooling medium sprayed by the distribution channels 125.

Alternatively, in a co-current arrangement of the present invention, the fan 110 pulls air through the second passage 150, down through the evaporative spiral plate heat exchanger 300, across the basin 210 and out through the first passage 130. That is, the downward direction of airflow through the evaporative spiral plate heat exchanger 300 is co-current with to the direction of cooling medium sprayed by the distribution channels 125.

The embodiment of FIGs. 4 and 5 works in a similar manner to that of FIGs. 1-3 above, in that the combination of the sprayed cooling medium onto the evaporative spiral plate heat exchanger 300 (i.e., the second channels 340), and the airflow through the second channels 340 of the evaporative spiral plate heat exchanger 300 causes the cooling medium on the second channels 340 evaporate, which further increases the thermal conductivity of the evaporative spiral plate heat exchanger 300. This evaporative effect improves the dissipation of heat from the process medium, thereby improving the efficiency of the WSAC 1. Due to the improved thermal efficiency of the WSAC 1 according to the present invention can have a reduced footprint.

The spray system 120 may be removably coupled to a top surface of the evaporative spiral plate heat exchanger 300, as shown in FIGs. 4 and 5. Further, the evaporative spiral plate heat exchanger 300 may be removably coupled to a top surface of a lower housing 200 comprising the basin 210. Similarly, the fan 110 may be removably coupled to the top surface of the lower housing 200 and may be horizontally spaced from the evaporative spiral plate heat exchanger 300.

Similar to that of FIGs. 1-3 above, the embodiment of FIGs. 4 and 5 may also be modular. The fan 110 may be a first module and the evaporative spiral plate heat exchanger 300 or the combination of the evaporative spiral plate heat exchanger 300 with the spray system 120 may be as second module, and the basin may be a third module. The first module, second module, and third module may be replaced with another module having different flow characteristics, including a module having a different configuration, such as a different height, a different fan size, and/or a different shape, as known in the art.

As set forth above with respect to the upper module 100, lower module 200 and the evaporative spiral plate heat exchanger 300, the first module, the second module and the third module may be provided with flanges to allow for connection between the first module, the second module and the third module. In case the spiral plate heat exchanger comprises a shell 370, the shell 370 of the spiral plate heat exchanger 300 may be provided with flanges.

Further, the evaporative spiral plate heat exchanger 300 may be oriented such that a center axis of the evaporative spiral plate heat exchanger 300 is along a vertical axis of the WSAC 1, and a radial axis of the evaporative spiral plate heat exchanger 300 is along a horizontal axis of the WSAC 1.

The present invention is not limited to the examples shown in FIGs. 1-5, and may have different shapes and configurations.

The disclosure of which described above is not limited to the materials and features described therein, and may be changed within the scope of the appended claims.

## Claims

1. A wet surface air cooler (WSAC) (1), comprising:
an evaporative spiral plate heat exchanger (300) including a first channel (330) configured to receive a process medium;
a spray system (120) configured to spray a cooling medium onto the evaporative spiral plate heat exchanger (300); and
a fan (110) configured to force air to flow through the evaporative spiral plate heat exchanger (300),
wherein the combination of the sprayed cooling medium onto the evaporative spiral plate heat exchanger (300) and the air flowing through the evaporative spiral plate heat exchanger (300) causes the cooling medium to at least partially evaporate to cause a temperature of the process medium to decrease.

2. The WSAC of claim 1, wherein the first channel (330) of the evaporative spiral plate heat exchanger (300) has a spiral shape and includes a plurality of winds for flowing the process medium,
wherein the evaporative spiral plate heat exchanger (300) further includes a set of second channels (340) extending axially through the evaporative spiral plate heat exchanger (300) for receiving air and cooling medium, and
wherein each second channel (340) is provided between winds of the first channel (330).

3. The WSAC of claim 2, wherein the first channel (330) is a closed path extending between an inlet and an outlet (310, 320) and is closed at top and bottom surfaces of the evaporative spiral plate heat exchanger (300), and
wherein the second channels (340) are open at the top and bottom surfaces of the evaporative spiral plate heat exchanger (300).

4. The WSAC of claim 3, wherein the inlet (310) is provided at a radial center of the evaporative spiral plate heat exchanger (300) and the outlet (320) is provided at an outermost radial surface of the evaporative spiral plate heat exchanger (300), or
wherein the inlet (320) is provided at the outermost radial surface of the evaporative spiral plate heat exchanger (300) and the outlet (310) is provided at the radial center of the evaporative spiral plate heat exchanger (300).

5. The WSAC of any one of the claims 2-4, wherein the evaporative spiral plate heat exchanger (300) has a cross-flow arrangement in which a direction of air and/or the cooling medium flowing through the second channels (340) is perpendicular to a direction of the process medium flowing through the first channel (330).

6. The WSAC of any one of the preceding claims, further comprising a lower housing (200) including a plurality of airflow passages (220) and a basin (210),
wherein the basin (210) is configured to receive the cooling medium sprayed by the spray system (120).

7. The WSAC of claim 6, wherein the airflow passages (220) of the lower housing (200) are configured to allow air to flow from inside of the WSAC (1) to outside of the WSAC (1) or from outside of the WSAC (1) to inside of the WSAC (1).

8. The WSAC of any one of the claims 6 and 7, wherein the fan (110) is provided above the evaporative spiral plate heat exchanger (300), and
wherein the evaporative spiral plate heat exchanger (300) is provided on the lower housing (200).

9. The WSAC of any one of the claims 6-8, wherein the lower housing (200) is a lower module (200), and wherein the fan (110) and the spray system (120) are part of an upper module (100), and
wherein the upper module (100) is configured to be removably fastened to an upper surface of the evaporative spiral plate heat exchanger (300) and the lower module (200) is configured to be removably fastened to a lower surface of the evaporative spiral plate heat exchanger (300).

10. The WSAC of any one of the preceding claims, wherein the fan (110), the spray system (120) and the evaporative spiral plate heat exchanger (300) are stacked in a vertical direction.

11. The WSAC of any one of the preceding claims, wherein the spray system (120) is a concentric spray system including a plurality of distribution channels (125) that are spaced from one another to distribute the cooling medium over the evaporative spiral plate heat exchanger (300).

12. The WSAC of any one of the claims 1-5, wherein the fan (110) is horizontally spaced from the evaporative spiral plate heat exchanger (300).

13. The WSAC of claim 12, further comprising a lower housing (200) including a basin (210),
wherein the basin (210) is configured to receive the cooling medium sprayed by the spray system (120),
wherein the fan (110) and the evaporative spiral plate heat exchanger (300) are provided on a top surface of the lower housing (200), and
wherein the spray system (120) is provided above the evaporative spiral plate heat exchanger (300).

14. The WSAC of claim 13, wherein the fan (110) is configured to force air across the basin (210) and through the evaporative spiral plate heat exchanger (300) or through the evaporative spiral plate heat exchanger (300) and across the basin (210).

15. The WSAC of any one of the preceding claims, wherein the spiral plate heat exchanger (300) comprises at least one spiral sheet (360) wound to form the first channel (330).

16. A method of cooling with a wet surface air cooler (WSAC) (1), the WSAC (1) comprising:
an evaporative spiral plate heat exchanger (300) including a first channel (330) configured to receive a process medium;
a spray system (120) configured to spray a cooling medium onto the spiral plate heat exchanger (300); and
a fan (110) configured to force air to flow through the evaporative spiral plate heat exchanger (300), the method comprising:
flowing the process medium through the first channel (330); and
simultaneously spraying, by the spray system (120), the cooling medium and operating the fan (110) to flow air through the evaporative heat exchanger (300) and cause the cooling medium to at least partially evaporate and cause a temperature of the process medium to decrease.

17. The method of claim 16, wherein the first channel (330) of the evaporative spiral plate heat exchanger has a spiral shape and includes a plurality of winds for flowing the process medium,
wherein the evaporative spiral plate heat exchanger (300) further includes a set of second channels (340) extending axially through the evaporative spiral plate heat exchanger (300), and
wherein each second channel (340) is provided between winds of the first channel (330),
the method further comprising, during the simultaneously spraying the cooling medium and operating the fan (110), flowing the cooling medium and air through the second channels (340) in a same direction or in opposite directions.

18. **The** method of claim 17, wherein the first channel (330) is a closed path extending between an inlet and an outlet (310, 320) and is closed at top and bottom surfaces of the evaporative spiral plate heat exchanger (300), and
wherein the second channels (340) are open at the top and bottom surfaces of the evaporative spiral plate heat exchanger (300), said method further comprising:
flowing the process medium from a center of the evaporative spiral plate heat exchanger (300), radially outwardly through the first channel (330) to an outer surface of the evaporative spiral plate heat exchanger (300);
allowing the cooling medium to flow downwardly through gravity; and
forcing the air upwardly, opposite to the direction of the cooling medium.

19. The method of claim 17, wherein the first channel (330) is a closed path extending between an inlet and an outlet (310, 320) and is closed at top and bottom surfaces of the evaporative spiral plate heat exchanger (300), and
wherein the second channels (340) are open at the top and bottom surfaces of the evaporative spiral plate heat exchanger (300), said method further comprising:
flowing the process medium from an outer surface of the evaporative spiral plate heat exchanger (300), radially inwardly through the first channel (330) to a center of the evaporative spiral plate heat exchanger (300);
allowing the cooling medium to flow downwardly through gravity; and
forcing the air upwardly, opposite to the direction of the cooling medium.

20. The method of any one of the claims 16-19, wherein the fan (110) and the spray system (120) are part of an upper module (100), and the WSAC (1) further comprising a lower module (200) including a plurality of airflow passages (220) and a basin (210),
said method further comprising removably fastening the upper module (100) to an upper surface of the evaporative spiral plate heat exchanger (300) and removably fastening the lower module (200) to a lower surface of the evaporative spiral plate heat exchanger (300).

21. The method of any one of the claims 16-20, wherein the spiral plate heat exchanger (300) comprises at least one spiral sheet (360) wound to form the first channel (330).

## Patentansprüche

1. Nassoberflächen-Luftkühler (WSAC) (1), Folgendes umfassend:
einen Verdunstungsspiralplattenwärmetauscher (300) einschließlich eines ersten Kanals (330), der konfiguriert ist, um ein Prozessmedium zu empfangen;
ein Sprühsystem (120), das konfiguriert ist, um ein Kühlmedium auf den Verdunstungsspiralplattenwärmetauscher (300) zu sprühen; und
ein Gebläse (110), das konfiguriert ist, um Luft zu zwingen, durch den Verdunstungsspiralplattenwärmetauscher (300) zu strömen,
wobei die Kombination von dem gesprühten Kühlmedium auf dem Verdunstungsspiralplattenwärmetauscher (300) und der durch den Verdunstungsspiralplattenwärmetauscher (300) strömenden Luft das Kühlmedium veranlasst, mindestens teilweise zu verdunsten, um eine Temperatur des Prozessmediums zu veranlassen, abzunehmen.

2. WSAC nach Anspruch 1, wobei der erste Kanal (330) des Verdunstungsspiralplattenwärmetauschers (300) eine Spiralgestalt aufweist und eine Vielzahl von Windungen zum Strömenlassen des Prozessmediums einschließt,
wobei der Verdunstungsspiralplattenwärmetauscher (300) ferner einen Satz von zweiten Kanälen (340), die sich zum Empfangen von Luft und Kühlmedium axial durch den Verdunstungsspiralplattenwärmetauscher (300) erstrecken, einschließt, und
wobei jeder zweite Kanal (340) zwischen Windungen des ersten Kanals (330) bereitgestellt ist.

3. WSAC nach Anspruch 2, wobei der erste Kanal (330) ein geschlossener Pfad ist, der sich zwischen einem Einlass und einem Auslass (310, 320) erstreckt und an einer oberen und einer unteren Fläche des Verdunstungsspiralplattenwärmetauschers (300) geschlossen ist, und
wobei die zweiten Kanäle (340) an der oberen und der unteren Fläche des Verdunstungsspiralplattenwärmetauschers (300) offen sind.

4. WSAC nach Anspruch 3, wobei der Einlass (310) an einer radialen Mitte des Verdunstungsspiralplattenwärmetauschers (300) bereitgestellt ist und der Auslass (320) an einer äußersten radialen Fläche des Verdunstungsspiralplattenwärmetauschers (300) bereitgestellt ist, oder
wobei der Einlass (320) an der äußersten radialen Fläche des Verdunstungsspiralplattenwärmetauschers (300) bereitgestellt ist und der Auslass (310) an der radialen Mitte des Verdunstungsspiralplattenwärmetauschers (300) bereitgestellt ist.

5. WSAC nach einem der Ansprüche 2 bis 4, wobei der Verdunstungsspiralplattenwärmetauscher (300) eine Querstromanordnung aufweist, in der eine Richtung von Luft und/oder des Kühlmediums, die/das durch die zweiten Kanäle (340) strömt/strömen, senkrecht zu einer Richtung des Prozessmediums ist, das durch den ersten Kanal (330) strömt.

6. WSAC nach einem der vorhergehenden Ansprüche, ferner umfassend ein unteres Gehäuse (200), das eine Vielzahl von Luftstromdurchlässen (220) und ein Becken (210) einschließt,
wobei das Becken (210) konfiguriert ist, um das durch das Sprühsystem (120) gesprühte Kühlmedium zu empfangen.

7. WSAC nach Anspruch 6, wobei die Luftstromdurchlässe (220) des unteren Gehäuses (200) konfiguriert sind, um es Luft zu erlauben, von innerhalb des WSAC (1) nach außerhalb des WSAC (1) oder von außerhalb des WSAC (1) nach innerhalb des WSAC (1) zu strömen.

8. WSAC nach einem der Ansprüche 6 und 7, wobei das Gebläse (110) über dem Verdunstungsspiralplattenwärmetauscher (300) bereitgestellt ist, und
wobei der Verdunstungsspiralplattenwärmetauscher (300) auf dem unteren Gehäuse (200) bereitgestellt ist.

9. WSAC nach einem der Ansprüche 6 bis 8, wobei das untere Gehäuse (200) ein unteres Modul (200) ist, und wobei das Gebläse (110) und das Sprühsystem (120) Teil eines oberen Moduls (100) sind, und
wobei das obere Modul (100) konfiguriert ist, um an einer oberen Fläche des Verdunstungsspiralplattenwärmetauschers (300) entfernbar befestigt zu sein und das untere Modul (200) konfiguriert ist, um an einer unteren Fläche des Verdunstungsspiralplattenwärmetauschers (300) entfernbar befestigt zu sein.

10. WSAC nach einem der vorhergehenden Ansprüche, wobei das Gebläse (110), das Sprühsystem (120) und der Verdunstungsspiralplattenwärmetauscher (300) in einer vertikalen Richtung gestapelt sind.

11. WSAC nach einem der vorhergehenden Ansprüche, wobei das Sprühsystem (120) ein konzentrisches Sprühsystem ist, das eine Vielzahl von Verteilungskanälen (125) einschließt, die von einander beabstandet sind, um das Kühlmedium über den Verdunstungsspiralplattenwärmetauscher (300) zu verteilen.

12. WSAC nach einem der Ansprüche 1 bis 5, wobei das Gebläse (110) horizontal von dem Verdunstungsspiralplattenwärmetauscher (300) beabstandet ist.

13. WSAC nach Anspruch 12, ferner umfassend ein unteres Gehäuse (200), das ein Becken (210) einschließt,
wobei das Becken (210) konfiguriert ist, um das durch das Sprühsystem (120) gesprühte Kühlmedium zu empfangen,
wobei das Gebläse (110) und der Verdunstungsspiralplattenwärmetauscher (300) auf einer oberen Fläche des unteren Gehäuses (200) bereitgestellt sind, und
wobei das Sprühsystem (120) über dem Verdunstungsspiralplattenwärmetauscher (300) bereitgestellt ist.

14. WSAC nach Anspruch 13, wobei das Gebläse (110) konfiguriert ist, um Luft über das Becken (210) und durch den Verdunstungsspiralplattenwärmetauscher (300) oder durch den Verdunstungsspiralplattenwärmetauscher (300) und über das Becken (210) zu zwingen.

15. WSAC nach einem der vorhergehenden Ansprüche, wobei der Spiralplattenwärmetauscher (300) mindestens ein Spiralblech (360) umfasst, das gewunden ist, um den ersten Kanal (330) zu bilden.

16. Verfahren des Kühlens mit einem Nassoberflächen-Luftkühler (WSAC) (1), wobei der WSAC (1) Folgendes umfasst:
einen Verdunstungsspiralplattenwärmetauscher (300) einschließlich eines ersten Kanals (330), der konfiguriert ist, um ein Prozessmedium zu empfangen;
ein Sprühsystem (120), das konfiguriert ist, um ein Kühlmedium auf den Spiralplattenwärmetauscher (300) zu sprühen; und
ein Gebläse (110), das konfiguriert ist, um Luft zu zwingen, durch den Verdunstungsspiralplattenwärmetauscher (300) zu strömen, wobei das Verfahren Folgendes umfasst:
Strömenlassen des Prozessmediums durch den ersten Kanal (330); und
gleichzeitiges Sprühen, durch das Sprühsystem (120), des Kühlmediums und Betreiben des Gebläses (110), um Luft durch den Verdunstungswärmetauscher (300) strömen zu lassen und das Kühlmedium zu veranlassen, mindestens teilweise zu verdunsten und eine Temperatur des Prozessmediums zu veranlassen, abzunehmen.

17. Verfahren nach Anspruch 16, wobei der erste Kanal (330) des Verdunstungsspiralplattenwärmetauschers eine Spiralgestalt aufweist und eine Vielzahl von Windungen zum Strömenlassen des Prozessmediums einschließt,
wobei der Verdunstungsspiralplattenwärmetauscher (300) ferner einen Satz von zweiten Kanälen (340), die sich axial durch den Verdunstungsspiralplattenwärmetauscher (300) erstrecken, einschließt, und
wobei jeder zweite Kanal (340) zwischen Windungen des ersten Kanals (330) bereitgestellt ist,
wobei das Verfahren ferner, während des gleichzeitigen Sprühens des Kühlmediums und Betreibens des Gebläses (110), das Strömenlassen des Kühlmediums und von Luft durch die zweiten Kanäle (340) in eine gleiche Richtung oder in unterschiedliche Richtungen umfasst.

18. Verfahren nach Anspruch 17, wobei der erste Kanal (330) ein geschlossener Pfad ist, der sich zwischen einem Einlass und einem Auslass (310, 320) erstreckt und an einer oberen und einer unteren Fläche des Verdunstungsspiralplattenwärmetauschers (300) geschlossen ist; und
wobei die zweiten Kanäle (340) an der oberen und der unteren Fläche des Verdunstungsspiralplattenwärmetauschers (300) offen sind, wobei das Verfahren ferner Folgendes umfasst:
Strömenlassen des Prozessmediums von einer Mitte des Verdunstungsspiralplattenwärmetauschers (300), radial nach außen durch den ersten Kanal (330) zu einer Außenfläche des Verdunstungsspiralplattenwärmetauschers (300);
Erlauben, dass das Kühlmedium durch Schwerkraft nach unten strömt; und
Zwingen der Luft nach oben, entgegengesetzt zu der Richtung des Kühlmediums.

19. Verfahren nach Anspruch 17, wobei der erste Kanal (330) ein geschlossener Pfad ist, der sich zwischen einem Einlass und einem Auslass (310, 320) erstreckt und an einer oberen und einer unteren Fläche des Verdunstungsspiralplattenwärmetauschers (300) geschlossen ist; und
wobei die zweiten Kanäle (340) an der oberen und der unteren Fläche des Verdunstungsspiralplattenwärmetauschers (300) offen sind, wobei das Verfahren ferner Folgendes umfasst:
Strömenlassen des Prozessmediums von einer äußeren Fläche des Verdunstungsspiralplattenwärmetauschers (300), radial nach innen durch den ersten Kanal (330) zu einer Mitte des Verdunstungsspiralplattenwärmetauschers (300);
Erlauben, dass das Kühlmedium durch Schwerkraft nach unten strömt; und
Zwingen der Luft nach oben, entgegengesetzt zu der Richtung des Kühlmediums.

20. Verfahren nach einem der Ansprüche 16 bis 19, wobei das Gebläse (110) und das Sprühsystem (120) Teil eines oberen Moduls (100) sind, und der WSAC (1) ferner ein unteres Modul (200) umfasst, das eine Vielzahl von Luftstromdurchlässen (220) und ein Becken (210) einschließt,
wobei das Verfahren ferner das entfernbare Befestigen des oberen Moduls (100) an einer oberen Fläche des Verdunstungsspiralplattenwärmetauschers (300) und das entfernbare Befestigen des unteren Moduls (200) an einer unteren Fläche des Verdunstungsspiralplattenwärmetauschers (300) umfasst.

21. Verfahren nach einem der Ansprüche 16 bis 20, wobei der Spiralplattenwärmetauscher (300) mindestens ein Spiralblech (360) umfasst, das gewunden ist, um den ersten Kanal (330) zu bilden.

## Revendications

1. Refroidisseur d'air de surface humide (WSAC) (1), comprenant :
un échangeur de chaleur évaporatif à plaques en spirale (300) incluant un premier canal (330) configuré pour recevoir un milieu de procédé ;
un système de pulvérisation (120) configuré pour pulvériser un milieu de refroidissement sur l'échangeur de chaleur évaporatif à plaques en spirale (300) ; et
un ventilateur (110) configuré pour forcer de l'air à circuler à travers l'échangeur de chaleur évaporatif à plaques en spirale (300),
dans lequel la combinaison du milieu de refroidissement pulvérisé sur l'échangeur de chaleur évaporatif à plaques en spirale (300) et de l'air circulant à travers l'échangeur de chaleur évaporatif à plaques en spirale (300) amène le milieu de refroidissement à s'évaporer au moins partiellement pour amener une température du milieu de procédé à diminuer.

2. WSAC selon la revendication 1, dans lequel le premier canal (330) de l'échangeur de chaleur évaporatif à plaques en spirale (300) a une forme de spirale et inclut une pluralité de spires pour faire circuler le milieu de procédé,
dans lequel l'échangeur de chaleur évaporatif à plaques en spirale (300) inclut en outre un ensemble de seconds canaux (340) s'étendant axialement à travers l'échangeur de chaleur évaporatif à plaques en spirale (300) pour recevoir de l'air et un milieu de refroidissement, et
dans lequel chaque second canal (340) est fourni entre des spires du premier canal (330).

3. WSAC selon la revendication 2, dans lequel le premier canal (330) est un chemin fermé s'étendant entre une entrée et une sortie (310, 320) et est fermé au niveau de surfaces du haut et du bas de l'échangeur de chaleur évaporatif à plaques en spirale (300), et
dans lequel les seconds canaux (340) sont ouverts au niveau des surfaces du haut et du bas de l'échangeur de chaleur évaporatif à plaques en spirale (300).

4. WSAC selon la revendication 3, dans lequel l'entrée (310) est fournie au niveau d'un centre radial de l'échangeur de chaleur évaporatif à plaques en spirale (300) et la sortie (320) est fournie au niveau d'une surface radiale la plus externe de l'échangeur de chaleur évaporatif à plaques en spirale (300), ou
dans lequel l'entrée (320) est fournie au niveau de la surface radiale la plus externe de l'échangeur de chaleur évaporatif à plaques en spirale (300) et la sortie (310) est fournie au niveau du centre radial de l'échangeur de chaleur évaporatif à plaques en spirale (300).

5. WSAC selon l'une quelconque des revendications 2 à 4, dans lequel l'échangeur de chaleur évaporatif à plaques en spirale (300) a un agencement à flux croisé dans lequel une direction de l'air et/ou du milieu de refroidissement circulant à travers les seconds canaux (340) est perpendiculaire à une direction du milieu de procédé circulant à travers le premier canal (330).

6. WSAC selon l'une quelconque des revendications précédentes, comprenant en outre un logement inférieur (200) incluant une pluralité de passages de flux d'air (220) et un bassin (210),
dans lequel le bassin (210) est configuré pour recevoir le milieu de refroidissement pulvérisé par le système de pulvérisation (120).

7. WSAC selon la revendication 6, dans lequel les passages de flux d'air (220) du logement inférieur (200) sont configurés pour permettre à de l'air de circuler depuis l'intérieur du WSAC (1) jusqu'à l'extérieur du WSAC (1) ou depuis l'extérieur du WSAC (1) jusqu'à l'intérieur du WSAC (1).

8. WSAC selon l'une quelconque des revendications 6 et 7, dans lequel le ventilateur (110) est fourni au-dessus de l'échangeur de chaleur évaporatif à plaques en spirale (300), et
dans lequel l'échangeur de chaleur évaporatif à plaques en spirale (300) est fourni sur le logement inférieur (200).

9. WSAC selon l'une quelconque des revendications 6 à 8, dans lequel le logement inférieur (200) est un module inférieur (200), et dans lequel le ventilateur (110) et le système de pulvérisation (120) font partie d'un module supérieur (100), et
dans lequel le module supérieur (100) est configuré pour être fixé de manière amovible à une surface supérieure de l'échangeur de chaleur évaporatif à plaques en spirale (300) et le module inférieur (200) est configuré pour être fixé de manière amovible à une surface inférieure de l'échangeur de chaleur évaporatif à plaques en spirale (300).

10. WSAC selon l'une quelconque des revendications précédentes, dans lequel le ventilateur (110), le système de pulvérisation (120) et l'échangeur de chaleur évaporatif à plaques en spirale (300) sont empilés dans une direction verticale.

11. WSAC selon l'une quelconque des revendications précédentes, dans lequel le système de pulvérisation (120) est un système de pulvérisation concentrique incluant une pluralité de canaux de distribution (125) qui sont espacés les uns des autres pour distribuer le milieu de refroidissement sur l'échangeur de chaleur évaporatif à plaques en spirale (300).

12. WSAC selon l'une quelconque des revendications 1 à 5, dans lequel le ventilateur (110) est espacé horizontalement de l'échangeur de chaleur évaporatif à plaques en spirale (300).

13. WSAC selon la revendication 12, comprenant en outre un logement inférieur (200) incluant un bassin (210),
dans lequel le bassin (210) est configuré pour recevoir le milieu de refroidissement pulvérisé par le système de pulvérisation (120),
dans lequel le ventilateur (110) et l'échangeur de chaleur évaporatif à plaques en spirale (300) sont fournis sur une surface du haut du logement inférieur (200), et
dans lequel le système de pulvérisation (120) est fourni au-dessus de l'échangeur de chaleur évaporatif à plaques en spirale (300).

14. WSAC selon la revendication 13, dans lequel le ventilateur (110) est configuré pour forcer de l'air en diagonale du bassin (210) et à travers l'échangeur de chaleur évaporatif à plaques en spirale (300) ou à travers l'échangeur de chaleur évaporatif à plaques en spirale (300) et en diagonale du bassin (210).

15. WSAC selon l'une quelconque des revendications précédentes, dans lequel l'échangeur de chaleur à plaques en spirale (300) comprend au moins une feuille en spirale (360) enroulée pour former le premier canal (330).

16. Procédé de refroidissement avec un refroidisseur d'air de surface humide (WSAC) (1), le WSAC (1) comprenant :
un échangeur de chaleur évaporatif à plaques en spirale (300) incluant un premier canal (330) configuré pour recevoir un milieu de procédé ;
un système de pulvérisation (120) configuré pour pulvériser un milieu de refroidissement sur l'échangeur de chaleur à plaques en spirale (300) ; et
un ventilateur (110) configuré pour forcer de l'air à circuler à travers l'échangeur de chaleur évaporatif à plaques en spirale (300), le procédé comprenant :
le fait de faire circuler le milieu de procédé à travers le premier canal (330) ; et
simultanément, le fait de pulvériser, par le système de pulvérisation (120), le milieu de refroidissement et le fait de faire fonctionner le ventilateur (110) pour faire circuler de l'air à travers l'échangeur de chaleur évaporatif (300) et d'amener le milieu de refroidissement à s'évaporer au moins partiellement et d'amener une température du milieu de procédé à diminuer.

17. Procédé selon la revendication 16, dans lequel le premier canal (330) de l'échangeur de chaleur évaporatif à plaques en spirale a une forme de spirale et inclut une pluralité de spires pour faire circuler le milieu de procédé,
dans lequel l'échangeur de chaleur évaporatif à plaques en spirale (300) inclut en outre un ensemble de seconds canaux (340) s'étendant axialement à travers l'échangeur de chaleur évaporatif à plaques en spirale (300), et
dans lequel chaque second canal (340) est fourni entre des spires du premier canal (330),
le procédé comprenant en outre, durant la pulvérisation du milieu de refroidissement simultanément avec le fonctionnement du ventilateur (110), le fait de faire circuler le milieu de refroidissement et de l'air à travers les seconds canaux (340) dans une même direction ou dans des directions opposées.

18. Procédé selon la revendication 17, dans lequel le premier canal (330) est un chemin fermé s'étendant entre une entrée et une sortie (310, 320) et est fermé au niveau de surfaces du haut et du bas de l'échangeur de chaleur évaporatif à plaques en spirale (300), et
dans lequel les seconds canaux (340) sont ouverts au niveau des surfaces du haut et du bas de l'échangeur de chaleur évaporatif à plaques en spirale (300), ledit procédé comprenant en outre :
le fait de faire circuler le milieu de procédé depuis un centre de l'échangeur de chaleur évaporatif à plaques en spirale (300), radialement vers l'extérieur à travers le premier canal (330) jusqu'à une surface externe de l'échangeur de chaleur évaporatif à plaques en spirales (300) ;
le fait de permettre au milieu de refroidissement de circuler vers le bas sous l'effet de la gravité ; et
le fait de forcer l'air vers le haut, à l'opposé de la direction du milieu de refroidissement.

19. Procédé selon la revendication 17, dans lequel le premier canal (330) est un chemin fermé s'étendant entre une entrée et une sortie (310, 320) et est fermé au niveau de surfaces du haut et du bas de l'échangeur de chaleur évaporatif à plaques en spirale (300), et
dans lequel les seconds canaux (340) sont ouverts au niveau des surfaces du haut et du bas de l'échangeur de chaleur évaporatif à plaques en spirale (300), ledit procédé comprenant en outre :
le fait de faire circuler le milieu de procédé depuis une surface externe de l'échangeur de chaleur évaporatif à plaques en spirale (300), radialement vers l'intérieur à travers le premier canal (330) jusqu'à un centre de l'échangeur de chaleur évaporatif à plaques en spirale (300) ;
le fait de permettre au milieu de refroidissement de circuler vers le bas sous l'effet de la gravité ; et
le fait de forcer l'air vers le haut, à l'opposé de la direction du milieu de refroidissement.

20. Procédé selon l'une quelconque des revendications 16 à 19, dans lequel le ventilateur (110) et le système de pulvérisation (120) font partie d'un module supérieur (100), et le WSAC (1) comprenant en outre un module inférieur (200) incluant une pluralité de passages de flux d'air (220) et un bassin (210),
ledit procédé comprenant en outre le fait de fixer de manière amovible le module supérieur (100) à une surface supérieure de l'échangeur de chaleur évaporatif à plaques en spirale (300) et le fait de fixer de manière amovible le module inférieur (200) à une surface inférieure de l'échangeur de chaleur évaporatif à plaques en spirale (300).

21. Procédé selon l'une quelconque des revendications 16 à 20, dans lequel l'échangeur de chaleur à plaques en spirale (300) comprend au moins une feuille en spirale (360) enroulée pour former le premier canal (330).
